# EUROPÄISCHE PATENTSCHRIFT

(11) **EP 2 745 003 B1**
(45) Veröffentlichungstag und Bekanntmachung des Hinweises auf die Patenterteilung: **14.09.2016**
(21) Anmeldenummer: 12731012.6
(22) Anmeldetag: 05.07.2012
(51) Int. Cl.: F02M 61/18, B05B 1/34

(54) **VENTIL FÜR EIN STRÖMENDES FLUID**
VALVE FOR A FLOWING FLUID
SOUPAPE POUR UN FLUIDE EN ÉCOULEMENT

(30) Priorität: 18.08.2011 DE 102011081175; 04.07.2012 DE 102012211665
(43) Veröffentlichungstag der Anmeldung: 25.06.2014
(73) Patentinhaber: Robert Bosch GmbH, 70442 Stuttgart (DE)
(72) Erfinder: KOCH, Kerstin, 71701 Schwieberdingen (DE); THOEMMES, Franz, 74321 Bietigheim-Bissingen (DE); JEANNEL, Laurent, 71229 Leonberg-Hoefingen (DE); STAHL, Martin, 71686 Remseck (DE)
(86) Internationale Anmeldenummer: PCT/EP2012/063075
(87) Internationale Veröffentlichungsnummer: WO 2013/023838

(56) Entgegenhaltungen:
- DE-A1- 3 808 396
- DE-A1-102012 201 187
- US-A1- 2003 234 005

## Beschreibung

### Stand der Technik

Die Erfindung geht aus von einem Ventil für ein strömendes Fluid, insbesondere Dosier- oder Einspritzventil für Brennkraftmaschinen, nach dem Oberbegriff des Anspruchs 1, wie z.B. in der DE 3808396 gezeigt.

Bei einem bekannten Brennstoff-Einspritzventil für Brennkraftmaschinen (DE 195 27 049 A1) ist der eine Ventilöffnung und einen Ventilsitz aufweisende Ventilsitzkörper in einem rohrförmigen Ventilsitzträger gegenüber dessen freiem Ende zurückversetzt angeordnet und begrenzt mit letzterem die Ventilkammer des Ventils. Eine in den Ventilsitzträger eingesetzte, der Ventilöffnung in Strömungsrichtung des Fluids nachgeordnete Zerstäubungsvorrichtung weist eine schalenförmige Spritzlochscheibe mit Schalenboden und Schalenrand auf. Der Schalenboden liegt plan auf der ebenen freien Stirnseite des freien Ventilsitzkörpers auf, und der Schalenrand stützt sich am Ventilsitzträger ab. Durch eine am Schalenrand umlaufende Schweißnaht und durch eine ringförmige Schweißnaht im Schalenboden ist die Spritzlochscheibe sowohl mit dem Ventilsitzträger als auch mit dem Ventilsitzkörper fest verbunden. In dem mit der Ventilöffnung deckungsgleichen zentralen Bereich des Schalenbodens sind vier Spritzlöcher angeordnet, die auf einem Lochkreis mit einem zur Ventilöffnung koaxialen Kreismittelpunkt angeordnet sind. Die Spritzlöcher sind durch Erodieren oder Stanzen hergestellt und können senkrecht oder schräg durch den Schalenboden geführt sein.

Ein bekanntes Kraft- oder Brennstoffeinspritzventil für Brennstoffeinspritzanlagen von Brennkraftmaschinen, insbesondere zum direkten Einspritzen von Brennstoff in einen Brennraum einer Brennkraftmaschine (DE 100 48 935 A1), weist ein von einem Aktuator betätigtes Ventilglied auf, das zum Öffnen und Schließen des Ventils mit einem an einem Ventilsitzkörper ausgebildeten, eine Ventilöffnung umschließenden Ventilsitz zusammenwirkt. Stromabwärts des Ventilsitzes ist ein scheibenförmiges Drallelement, auch Spritzlochscheibe genannt, angeordnet, das einen mit der Ventilöffnung kommunizierenden Einlassbereich und mehrere Auslassöffnungen, auch Spritzlöcher genannt, aufweist. Die Spritzlöcher sind zentral in je einer Drallkammer angeordnet. Vom Einlassbereich führt je ein Drallkanal zu je einer Drallkammer und mündet tangential in dieser, so dass der vom Einlassbereich zu den Drallkammern strömende Brennstoff die Drallkammern asymmetrisch anströmt. Das Drallelement ist aus einem Blech hergestellt, wobei die Öffnungsstrukturen von Einlassbereich, Drallkanäle und Drallkammern mittels Stanzen, Prägen Erodieren oder Laserbohren eingebracht sind. Durch das Drallelement wird eine gute Zerstäubung des mit Hochdruck abgespritzten Brennstoffs erzielt.

### Offenbarung der Erfindung

Das erfindungsgemäße Ventil mit den Merkmalen des Anspruchs 1 hat den Vorteil, dass durch Drallkammer und Drallkanal in der Spritzlochscheibe eine Drallaufbereitung des Fluids erzielt wird, die ein Abspritzen des Fluids als fein zerstäubtes Spray gewährleistet. Durch Variation der Verhältnisse von Querschnitt des Drallkanals zu Lochquerschnitt und Lochgeometrie kann der Drall so eingestellt werden, dass schmalere und breitere Einzelstrahlen, auch Spraylamellen genannt, im Spray entstehen. Zusätzlich können Strahlwinkel und Strahlform beeinflusst werden. Mit den in Anspruch 1 angegebenen Verhältnisgrößen von Kanalquerschnitt zu Lochquerschnitt wird bei mittleren Fluiddrücken, wie sie bei der Saugrohreinspritzung in Ottomotoren, bei sog. DNOX-Systemen zum dosierten Einspritzen einer Harnstoff-Wasser-Lösung in das Abgas einer Brennkraftmaschine oder bei Heizölbrennern vorherrschen, die Fluidaufbereitung beim dosierten Abspritzen in Hinblick auf gewünschte kleine Strahlwinkel und hohe Zerstäubungsgüte optimiert. Durch die genannte Abstimmung der Querschnittsabmessungen von Drallkanal und Spritzloch aufeinander wird erreicht, dass die dem Fluid beim Durchlaufen von Drallkammer und Spritzloch aufgedrückte Drallintensität so klein wie möglich zur Gewinnung kleiner Strahlwinkel und so groß wie nötig zur Erzielung der hoheh Zerstäubungsgüte ist.

Die in ihrer Aufbereitungsqualität deutlich verbesserte Spritzlochscheibe kann in bereits in Produktion befindlichen Ventilen ohne Änderung am Ventilkonzept eingesetzt und mit den üblichen Verbindungsmethoden, z.B. Schweißen, an den Ventilen angebracht werden, wobei mit verschiedenen Modifikationen der Spritzlochscheibe ein Variantenrahmen bezüglich Strahlwinkel, statischen Durchfluss und Strahlbreite und Strahlform der gewünschten Fluidabspritzung für die Ventile vorgehalten werden kann. Mit dem erfindungsgemäßen Ventil wird eine platzsparende Ausführung einer effektiven Drallzerstäubung mit minimalem Totvolumen hinter dem Ventilsitz realisiert, die kostengünstig in einer einzigen Spritzlochscheibe integriert ist. Die Spritzlochscheibe kann dabei als Mehrloch- oder Einlochscheibe ausgeführt werden.

Durch die in den weiten Ansprüchen aufgeführten Maßnahmen sind vorteilhafte Weiterbildungen und Verbesserungen des im Anspruch 1 angegebenen Ventils möglich.

Gemäß einer bevorzugten Ausführungsform der Erfindung weist die Drallkammer eine axiale Kammertiefe und einen Kammerdurchmesser auf, die so bemessen sind, dass das Verhältnis von Kammertiefe zu Kammerdurchmesser einen unteren Grenzwert von 0,2 und einen oberen Grenzwert von 0,6 aufweist und jeden dazwischen liegenden Wert annehmen kann. Alternativ oder zusätzlich weist das Spritzloch eine Lochlänge und einen Lochdurchmesser auf, die so bemessen sind, dass das Verhältnis von Lochlänge zu Lochdurchmesser einen Wertbereich abdeckt, dessen untere Grenze 0,2 und dessen obere Grenze 0,6 beträgt. Mit beiden Maßnahmen lässt sich die Drallintensität zur weiteren Verbesserung der Zerstäubungsqualität zusätzlich und zielgerichtet beeinflussen.

Gemäß einer bevorzugten Ausführungsform der Erfindung ist die von der Ventilkammer abgekehrte Außenfläche des Ventilsitzkörpers eben bzw. plan ausgebildet, und die Spritzlochscheibe liegt unmittelbar an der Außenfläche des Ventilsitzkörpers an. Die ebene Ventilsitzkörper-Außenfläche bildet somit vorteilhaft eine Abdeckung für die Drallkammer und Drallkanal bildenden Vertiefungen in der Spritzlochscheibe.

Ist die Planheit der Ventilsitzkörper-Außenfläche nicht ausreichend, so ist gemäß einer vorteilhaften Ausführungsform der Erfindung zwischen Spritzlochscheibe und Ventilsitzkörper eine Ausgleichsscheibe angeordnet, die eine an der Spritzlochscheibe anliegende, ebene oder plane Scheibenfläche und ein mit der Ventilöffnung koaxiales Zentralloch aufweist und die Vertiefungen für Drallkanal und Drallkammer in der Spritzlochscheibe abdeckt. Die beiden Scheiben sind dann bezüglich ihrer aufeinanderliegenden Scheibenflächen extern kalibriert und gefügt, so dass Fehlanströmungen der Drallkammern und Drallkanäle aufgrund von Spalten in der Abdeckung der Vertiefungen für Drallkammer und Drallkanal vermieden werden.

Gemäß einer vorteilhaften Ausführungsform der Erfindung weist die Spritzlochscheibe eine Scheibendicke auf, die im Bereich von 0,15 mm bis 0,25 mm liegt. Diese geringe Scheibendicke hat den Vorteil, dass die Länge des mindestens einen Spritzlochs klein ist, damit im Spritzloch nur geringe Reibungsverluste entstehen und somit Verluste der Drallintensität des Fluids im Spritzloch gering bleiben. Die aus Edelstahl gefertigte Spritzlochscheibe lässt sich aufgrund ihrer geringen Dicke durchschweißen und somit gut an den Ventilsitzkörper anschweißen, ohne dass ein nennenswerter Verzug des Ventilsitzkörpers auftritt. Durch das Anschweißen der Spritzlochscheibe wird somit die Dichtheit des Ventils nicht beeinträchtigt. Die Spritzlochscheibe lässt sich gut in herkömmliche Ventile implementieren, ohne deren Baulänge zu vergrößern. Der einstückig angeformte Ringsteg ergibt eine napf- oder schalenartige Form der Spritzlochscheibe, die eine ausreichende Stabilität gewährleistet und ein alternatives Anschweißen am Ventilsitzträger über Durchschweißen des dünnen Schalenrands oder des dünnen Schalenbodens erlaubt. Eine gleich gute Stabilität der dünnen Spritzlochscheibe wird auch durch ihre Fügung mit der Ausgleichsscheibe erzielt.

Gemäß einer vorteilhaften Ausführungsform der Erfindung ist das Einformen von Drallkammer und Drallkanal in die Scheibenfläche durch Einprägen oder durch Materialabtragung mittels Erodieren, Ätzen oder UKP-(Ultrakurzpuls-)Laser vorgenommen. Bei allen Herstellungsarten kann durch Variation des Verhältnisses von Kanalquerschnitt zu Lochquerschnitt und Lochgeometrie der Drall so eingestellt werden, dass schmale und breite Einzelstrahlen bzw. Fluidlamellen im Fluidspray entstehen. Ebenso kann das mindestens eine Spritzloch zylindrisch oder konusförmig mit in Strömumgsrichtung zunehmenden Querschnitt und mit rechtwinklig oder geschrägt zur Scheibenfläche verlaufender Lochachse ausgeführt werden.

Gemäß einer vorteilhaften Ausführungsform der Erfindung weist der Drallkanal einen von der Ventilöffnung wegführenden Einströmbereich und einen in die Drallkammer einmündenden Anströmbereich auf, der in Zuordnung zur Drallkammer so angeordnet ist, dass das Fluid tangential in die Drallkammer einströmt. Auf diese Weise wird das Spritzloch über den Drallkanal seitlich angeströmt und so in der Drallkammer ein Drall erzeugt, der über das mindestens eine Spritzloch zu einer sehr feinen Zerstäubung des Sprays mittels einer oder mehrerer Fluidlamellen führt.

Gemäß einer vorteilhaften Ausführungsform der Erfindung verjüngt sich die Kanalbreite des Drallkanals im Einströmbereich in Strömungsrichtung und ist vorzugsweise im Anströmbereich konstant. Dadurch wird eine Drosselung des Fluids im Drallkanal minimiert bzw. kann recht genau eingestellt werden.

Gemäß einer vorteilhaften Ausführungsform der Erfindung weist der Drallkanal zumindest im Ansströmbereich eine äußere Kanalseitenwand, die tangential an die Wand der Drallkammer geführt ist, und eine dieser gegenüberliegende innere Kanalseitenwand auf, die einen solchen Abstand von der äußeren Kanalseitenwand hat, dass eine gedachte Fluchtlinie der innere Kanalseitenwand durch das Spritzloch verläuft. Durch diese konstruktiven Maßnahmen wird die Drallintensität maximal herabgesetzt, was besonders bei höheren Fluiddrücken in den Drallkanälen die Optimierung der Drallintensität erleichtert.

Gemäß einer vorteilhaften Ausführungsform der Erfindung sind mehrere Spritzlöcher auf einem zur Ventilöffnung konzentrischen Kreis mit gleichem Abstand voneinander angeordnet und ist eine der Zahl der Spritzlöcher entsprechende Zahl von Drallkanälen vorhanden, die sternförmig zur Ventilöffnung mit unter der Ventilöffnung liegenden Sternpunkt angeordnet sind. Hierdurch lässt sich vorteilhaft eine Mehrlochscheibe mit guter Zerstäubungsqualität realisieren. Vorzugsweise wrd die Spritzlochscheibe je nach Einsatzzweck mit zwei bis sechs Spritzlöchern versehen.

Gemäß einer vorteilhaften Ausführungsform der Erfindung ist in der Spritzlochscheibe ein einziges Spritzloch vorhanden, das im Radialabstand zur Ventilöffnung angeordnet ist. Zu der das Spritzloch umgebenden Drallkammer sind von der Ventilöffnung aus zwei bogenförmige Drallkanäle geführt, die in der Spritzlochscheibe spiegelbildlich zueinander angeordnet sind. Mit einer solche Einloch-Variante der Spritzlochscheibe können bei sehr guter Zerstäubung des Fluids besonders kleine statische Durchflussmengen dargestellt werden. Durch die Anströmung der Drallkammer über die beiden bogenförmigen Drallkanäle, deren Kanalbreite wiederum vorteilhaft sich im Einströmbereich in Strömungsrichtung verjüngt und vorzugsweise im Anströmbereich zumindest annähernd konstant ist, lässt sich ein gleichmäßiger Drall aufbauen.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Figur 1 ausschnittweise einen Längsschnitt eines Ventils für ein Fluid mit Ventilsitzkörper und dem Ventilsitzkörper in Strömungsrichtung nachgeordneter Spritzlochscheibe,
Figur 2 eine Draufsicht der Spritzlochscheibe, perspektivisch dargestellt,
Figur 3 eine Unteransicht der Spritzlochscheibe in Richtung Pfeil III in Figur 1, perspektivisch dargestellt,
Figur 4 einen Längsschnitt eines modifizierten Ventilsitzkörpers mit Spritzloch- und Ausgleichsscheibe,
Figur 5 eine Draufsicht der Ausgleichsscheibe in Figur 4, perspektivisch dargestellt,
Figur 6 eine Draufsicht der Spritzlochscheibe in Figur 4, perspektivisch dargestellt,
Figur 7 einen Längsschnitt eines Ventilsitzkörpers mit in Strömungsrichtung nachgeordneter Spritzlochscheibe gemäß einem weiteren Ausführungsbeispiel,
Figur 8 eine Draufsicht der Spritzlochscheibe in Figur 7, perspektivisch dargestellt,
Figur 9 eine Unteransicht der Spritzlochscheibe in Richtung Pfeil IX in Figur 7, perspektivisch dargestellt.

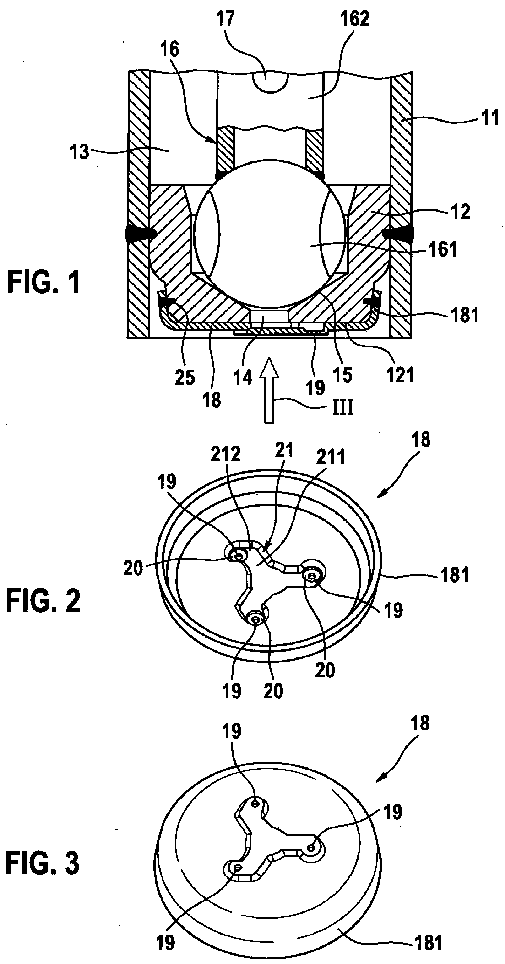

Das in Figur 1 ausschnittweise mit seinem fluidaustrittsseitigen Ende dargestellte Ventil für ein strömendes Fluid wird z. B. als Einspritzventil zum Einspritzen von Kraftstoff in Kraftstoffeinspritzanlagen von Brennkraftmaschinen oder zum dosierten Einspritzen von Flüssigkeiten, wie z.B. Harnstoff-Wasser-Lösungen, in den Abgasstrang von Brennkraftmaschinen zwecks Nachbehandlung des Abgases eingesetzt, findet aber auch bei Heizölbrennern in Heizungsanlagen vorteilhaft Anwendung. Das Ventil weist einen Teil eines Ventilgehäuses bildenden, hülsenförmigen Ventilsitzträger 11 auf, der mit einem Ventilsitzkörper 12 abgeschlossen ist. In dem zusammen mit dem Ventilsitzträger 11 eine Ventilkammer 13 begrenzenden Ventilsitzkörper 12 ist eine Ventilöffnung 14 und ein die Ventilöffnung 14 umgebender Ventilsitz 15 ausgebildet. Der Ventilsitz 15 wirkt zum Schließen und Freigeben der Ventilöffnung 14 mit einem kugelförmigem Schließkopf 161 eines Ventilglieds 16 zusammen, der an dem dem Ventilsitzkörper 12 zugekehrten Ende einer hohlen Ventilnadel 162 befestigt, z.B. angeschweißt, ist. Über die hohle Ventilnadel 162 des Ventilglieds 16 erfolgt die Fluidzufuhr zur Ventilkammer 13, wozu in der Ventilnadel 162 mindestens ein Durchflussloch 17 vorgesehen ist. Der Ventilsitz 15 bildet zusammen mit dem Schließkopf 161 einen Dichtsitz, der von dem in der Ventilkammer 13 unter Systemdruck stehenden Fluidvolumen beaufschlagt ist. Zum Schließen der Ventilöffnung 14 ist der Schließkopf 161 von einer an der Ventilnadel 162 angreifenden, hier nicht dargestellten Ventilschließfeder auf den Ventilsitz 15 aufgepresst. Das Freigeben der Ventilöffnung 14 erfolgt durch Abheben des Schließkopfes 161 von dem Ventilsitz 15 gegen die Rückstellkraft der Ventilschließfeder und wird in bekannter Weise mittels eines an der Ventilnadel 162 angreifenden elektromagnetischen, piezokeramischen oder magnetostriktiven Aktors bewirkt.

Der Ventilöffnung 14 ist in Strömungsrichtung des Fluids eine Zerstäuber- oder Spritzlochscheibe 18 nachgeordnet, die mindestens ein Spritzloch 19 aufweist. Im Ausführungsbeispiel der Spritzlochscheibe 18 gemäß Figur 1 bis 3 sind mehrere Spritzlöcher 19, hier drei, auf einem zur Ventilöffnung 14 konzentrischen Kreis mit gleichem Abstand voneinander angeordnet. Die Spritzlochscheibe 18 weist in Zuordnung zum Spritzloch 19 eine zum Spritzloch 19 konzentrische Drallkammer 20 und einen von der Drallkammer 20 bis unter die Ventilöffnung 14 führenden Drallkanal 21 auf, so dass im Ausführungsbeispiel der Spritzlochscheibe 19 gemäß Figur 1 bis 3 die Zahl der Drallkammern 20 und Drallkanäle 21 der Zahl der Spritzlöcher 19 entspricht. Die Drallkanäle 21 sind sternförmig angeordnet, wobei der Sternpunkt unter der Ventilöffnung 14 liegt. Die Drallkammern 20 und Drallkanäle 21 sind als Vertiefungen in die dem Ventilsitzkörper 12 zugekehrte Scheibenfläche der Spritzlochscheibe 18 eingeformt. Dieses Einformen erfolgt durch Einprägen oder durch Materialabtragung mittels Erodieren, Ätzen oder UKP-(Ultrakurz-)Laser. Mit denselben Verfahren oder durch Stanzen werden auch die durch die Spritzlochscheibe 18 hindurchtretenden Spritzlöcher 19 eingebracht, wobei je nach gewünschter Beeinflussung des aus den Spritzlöchern 19 austretenden Fluids die Spritzlöcher 19 Zylinderform oder Kegelstumpfform mit in Strömungsrichung zunehmendem Durchmesser bzw. Querschnitt aufweisen und die Spritzlochachsen parallel zur Achse der Spritzlochscheibe 18 oder zu dieser geneigt, bzw. recht- oder spitzwinkelig zur Scheibenfläche, verlaufen.

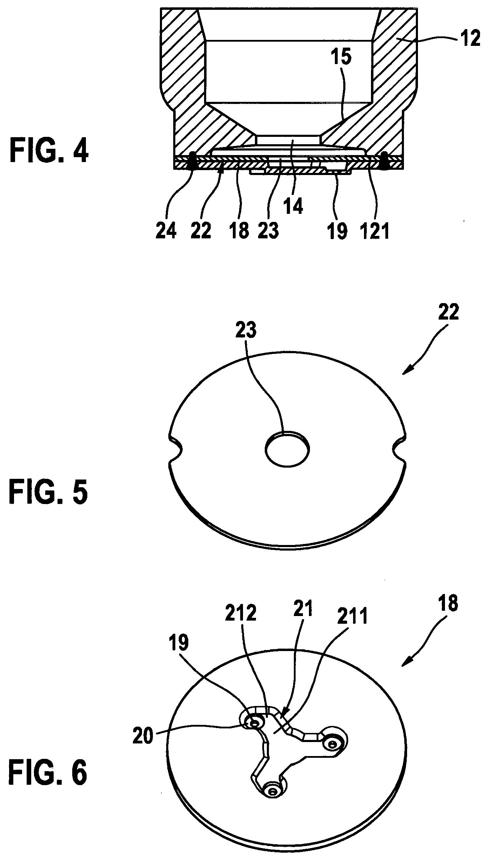

Jeder Drallkanal 21 weist einen von der Ventilöffnung 14 wegführenden Einströmbereich 211 und einen in die Drallkammer 20 einmündenden Anströmbereich 212 auf. Der Anströmbereich 212 ist in Zuordnung zur Drallkammer 20 so angeordnet, dass das Fluid tangential in die Drallkammer 20 einströmt. Um die Drosselung des Fluids im Drallanal 21 zu minimieren, bzw. recht genau einstellen zu können, verjüngt sich im Einströmbereich 211 die Kanalbreite, während sie im Anströmbereich 212 weitgehend konstant ist. Um in dem Ausführungsbeispiel der Spritzlochscheibe 18 gemäß Figur 1 bis 3 bei der sternförmigen Anordnung der Drallkanäle 21 die tangentiale Einströmung des Fluids in die Drallkammer 20 zu realisieren, ist der Anströmbereich 211 der Drallkanäle 21 gegenüber dem Einströmbereich 212 abgewinkelt. Wie in Figur 1 dargestellt ist, ist die Spritzlochscheibe 18 an die freie, eben und plan ausgeführte Außenfläche 121 des Ventilsitzkörpers 12 angelegt, so dass die ebene Außenfläche 121 des Ventilsitzkörpers 12 die Drallkammer 20 und Drallkanal 21 bildenden Vertiefungen abdeckt. Ist die Planheit der Außenfläche 121 des Ventilsitzkörpers 12 nicht hinreichend gegeben, so wird, wie dies im Ausführungsbeispiel der Figuren 4 bis 6 dargestellt ist, zwischen dem Ventilsitzkörper 12 und der Spritzlochscheibe 18 noch eine Ausgleichsscheibe 22 angeordnet, die ein mit der Ventilöffnung 14 koaxiales Zentralloch 23 aufweist und anstelle der Außenfläche 121 des Ventilsitzkörpers 12 die Abdeckung der Vertiefungen von Drallkammer 20 und Drallkanal 21 übernimmt. Ausgleichsscheibe 23 und Spritzlochscheibe 18 werden extern kalibriert und dann an den Ventilsitzkörper 12 angesetzt und an diesem befestigt, wie es in Figur 4 durch die umlaufende Schweißnaht 24 angedeutet ist. Bei dem Ausführungsbeispiel der Spritzlochscheibe 18 gemäß Figur 1 bis 3 ist die Spritzlochscheibe 18 mit einem randseitig umlaufenden, einstückig angeformten Ringsteg 181 versehen, so dass sie eine napf- oder schalenförmige Form aufweist. Der Ringsteg oder Napf- oder Schalenrand übergreift den Ventilsitzkörper 12 formschlüssig und ist an dem Ventilsitzkörper 12 unter Durchschweißen angeschweißt, wie dies durch die in Figur 1 engezeichnete Schweißnaht 25 angedeutet ist. Alterativ kann die Spritzlochscheibe 18 aber auch im Napf- oder Schalenboden durchgeschweißt und mit dem Ventilsitzkörper 12 verbunden werden.In beiden Ausführungsbeispielen der Spritzlochscheibe 18 gemäß Figur 1 bis 3 und gemäß Figur 4 bis 6 ist die Spritzlochscheibe 18 extrem dünn und aus Edelstahl gefertigt. Ihre Scheibendicke beträgt nur 0,15 mm bis 0,25 mm.

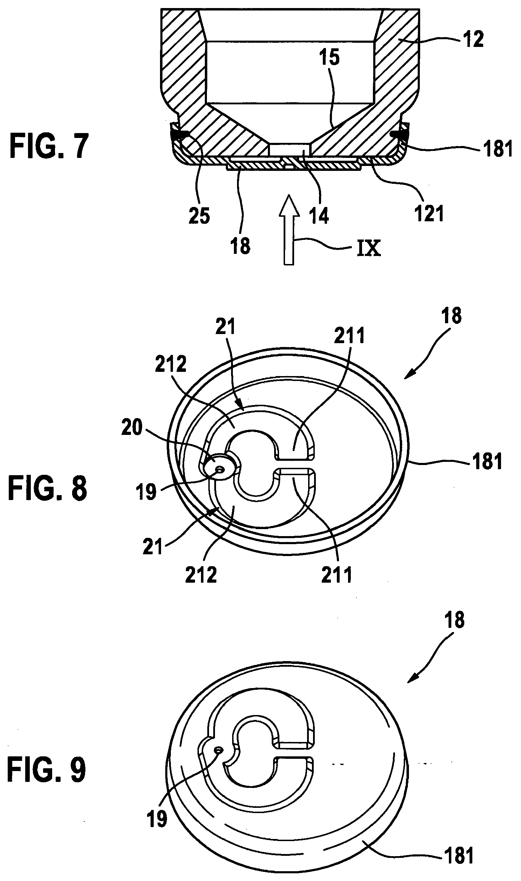

Mit der in Figur 7 bis 9 dargestellten Spritzlochscheibe 18 ist eine sog. Einloch-Variante der Spritzlochscheibe 18 für besonders kleine statische Durchflussmengen des Fluids dargestellt. Das einzige Spritzloch 19 in der Spritzlochscheibe 18 ist im Radialabstand zu der im Ventilsitzkörper 12 ausgebildeten Ventilöffnung 14 angeordnet, und zu der das Spritzloch 19 umgebenden Drallkammer 20 sind zwei identisch ausgebildete, bogenförmige Drallkanäle 21 geführt, die in der Spritzlochscheibe 18 spiegelbildlich zueinander angeordnet sind. Auch hier weist jeder der beiden Drallkanäle 21 einen von der Ventilöffnung 14 wegführenden Einströmbereich 211, dessen Kanalbreite sich in Strömungsrichtung des Fluids verjüngt, und einen in die Drallkammer 20 tangential einlaufenden Anströmbereich 212 auf, dessen Kanalbreite weitgehend konstant ist. Die Enden der Einströmbereiche 211 werden wiederum von der Ventilöffnung 14 überdeckt. Die Spritzlochscheibe 18 ist, wie die Spritzlochscheibe 18 in Figur 1 bis 3, mit einem einstückig angeformten Ringsteg 181 ausgestattet, über den die Spritzlochscheibe 18 am Ventilsitzkörper 12 festgelegt ist, z.B. durch die Schweißnaht 25.

Dem aus der Ventilöffnung 14 unter Druck dosiert austretenden Fluid wird beim Durchlaufen von Drallkanal 21, Drallkammer 20 und Spritzloch 19 ein Drall aufgedrückt, der eine Zerstäubung des aus dem mindesten einen Spritzloch 19 austretenden Fluids zu einem Spray bewirkt, wobei das Spray eine Spraykeule oder einen Spraykegel mit einer Vielzahl von Spraylamellen oder Einzelstrahlen darstellt, die einen mehr oder weniger großen Strahlwinkel gegenüber der Keulen oder Kegelachse aufweisen. Für das bevorzugte Einsatzgebiet des hier vorgestellten Ventils, nämlich dosiertes Einpritzen von Kraftstoff in das Saugrohrsystem oder von Harnstoff-Wasser-Lösungen in den Abgastrakt von Brennkraftmaschinen oder von Heizöl in die Brennkammer einer Heizungsanlage, ist einerseits eine sehr gute Zerstäubung gewünscht und sind anderseits kleine Strahlwinkel der Spraylamellen, also ein kleiner Kegelwinkel des Spraykegels, gefordert. Eine große Drallintensität ergibt eine gute Zerstäubung aber auch relativ große Strahlwinkel. Zur Optimierung der Drallintensität dahingehend, dass sie zwecks Erzeugung kleiner Strahlwinkel so klein wie möglich und zwecks Gewinnung einer hohen Zerstäubungsqualität so groß wie nötig ist, sind die Ausbildungen von Drallkanal 21, Drallkammer 20 und Spritzloch 19 in der Spritzlochscheibe 18 aufeinander abgestimmt. Zunächst hat der Drallkanal 21 einen solchen Kanalquerschnitt und das Spritzloch 19 einen solchen Lochquerschnitt, dass das Verhältnis von Kanalquerschnitt und Lochquerschnitt gleich oder größer als 1,5 ist. Der Kanalquerschnitt ist also relativ groß. Darüberhinaus hat die Drallkammer 20 eine solche Kammertiefe und einen solchen Kammerdurchmesser, dass das Verhältnis von Kammertiefe zu Kammerdurchmesser minimal 0,2 und maximal 0,6 ist. Die Drallkammer 20 ist also relativ kurz. Zusätzlich oder alterativ dazu hat das Spritzloch 19 eine solche Lochlänge und einen solchen Lochdurchmesser, dass das Verhältnis von Lochlänge zu Lochdurchmesser minimal 0,2 und maximal 0,6 ist. Das Spritzloch 19 ist also relativ kurz. Weiterhin ist bevorzugt beim Drallkanal 21, der zumindest im Anströmbereich 212 eine tangential an die Kammerwand der Drallkammer 20 geführte äußere Kanalwand und eine dieser gegenüberliegende innere Kanalwand aufweist, die innere Kanalwand mit einem solchen Abstand von der äußeren Kanalwand angeordnet, dass eine gedachte Fluchtlinie zur inneren Kanalwand durch das Spritzloch 19 führt.

## Patentansprüche

1. Ventil für ein strömendes Fluid, insbesondere Dosier- oder Einspritzventil für Brennkraftmaschinen, mit einem eine Ventilkammer (13) abschließenden Ventilsitzkörper (12), in dem eine Ventilöffnung (14) ausgebildet ist, und mit einer dem Ventilsitzkörper (12) in Strömungsrichtung des Fluids nachgeordneten Spritzlochscheibe (18), die mindestens ein Spritzloch (19), eine zum Spritzloch (19) konzentrische Drallkammer (20) und mindestens einen von der Drallkammer (20) bis unter die Ventilöffnung (14) mit gleichbleibendem Höhenniveau führenden Drallkanal (21) aufweist, und Drallkammer (20) und Drallkanal (21) als Vertiefungen in die dem Ventilsitzkörper (12) zugekehrte Scheibenfläche der Spritzlochscheibe (18) eingeformt sind, **dadurch gekennzeichnet, dass** der Drallkanal (21) einen Kanalquerschnitt und das Spritzloch (19) einen Lochquerschnitt aufweist, die so bemessen sind, dass das Verhältnis von Kanalquerschnitt zu Lochquerschnitt gleich oder größer 1,5 ist und wobei die Drallkammer (20) gegenüber dem jeweiligen Drallkanal (21) selbst vertieft eingeformt ist.

2. Ventil nach Anspruch 1, **dadurch gekennzeichnet, dass** die Drallkammer (20) einen Kammerdurchmesser und eine axiale Kammertiefe aufweist, die so bemessen sind, dass das Verhältnis von Kammertiefe zu Kammerdurchmesser durch einen Wertebereich bestimmt ist, dessen unterer Grenzwert 0,2 und dessen oberer Grenzwerte 0,6 beträgt.

3. Ventil nach Anspruch 1 oder 2, **dadurch gekennzeichnet, dass** das Spritzloch (19) eine Lochlänge und einen Lochdurchmesser aufweist, die so bemessen sind, dass das Verhältnis von Lochlänge zu Lochdurchmesser einen Wertebereich abdeckt, dessen unterer Grenzwert 0,2 und dessen oberer Grenzwert 0,6 beträgt.

4. Ventil nach einem der Ansprüche 1 bis 3, **dadurch gekennzeichnet, dass** der Ventilsitzkörper (12) eine von der Ventilkammer (13) abgekehrte, ebene Außenfläche (121) aufweist und die Spritzlochscheibe (18) unmittelbar an der Außenfläche des Ventilsitzkörpers (12) anliegt.

5. Ventil nach Anspruch 4, **dadurch gekennzeichnet, dass** die Spritzlochscheibe (18) mit einem randseitig umlaufenden, einstückig angeformten Ringsteg (181) den Ventilsitzkörper (20) übergreift.

6. Ventil nach einem der Ansprüche 1 bis 3, **dadurch gekennzeichnet, dass** der Ventilsitzkörper (12) eine von der Ventilkammer (13) abgekehrte Außenfläche (121) aufweist und zwischen Spritzlochscheibe (18) und Außenfläche eine Ausgleichsscheibe (22) angeordnet ist, die eine an der Spritzlochscheibe (18) plan anliegende ebene Scheibenfläche und ein mit der Ventilöffnung (14) koaxiales Zentralloch (23) aufweist.

7. Ventil nach einem der Ansprüche 1 bis 6, **dadurch gekennzeichnet, dass** die Spritzlochscheibe (18) eine Scheibendicke aufweist, die im Bereich von 0,15 mm bis 0,25 mm liegt.

8. Ventil nach einem der Ansprüche 1 bis 7, **dadurch gekennzeichnet, dass** das Einformen von Drallkammer (20) und Drallkanal (21) in die Spritzlochscheibe (18) durch Einprägen oder durch Materialabtragung mittels Erodieren, Ätzen oder UKP-Laser vorgenommen ist.

9. Ventil nach einem der Ansprüche 1 bis 8, **dadurch gekennzeichnet, dass** der Drallkanal (21) einen von der Ventilöffnung (14) wegführenden Einströmbereich (211) und einen in die Drallkammer (20) mündenden Anströmbereich (212) aufweist, der in Zuordnung zur Drallkammer (20) so angeordnet ist, dass das Fluid tangential in die Drallkammer (20) einströmt.

10. Ventil nach Anspruch 9, **dadurch gekennzeichnet, dass** die Kanalbreite des Drallkanals (21) im Einströmbereich (211) sich in Strömungsrichtung des Fluids verjüngt und vorzugsweise im Anströmbereich (212) zumindest annähernd konstant ist.

11. Ventil nach Anspruch 9 oder 10, **dadurch gekennzeichnet, dass** der Drallkanal (21) zumindest im Anströmbereich eine äußere Kanalseitenwand, die tangential an die Wand der Drallkammer (20) geführt ist, und eine dieser gegenüberliegende innere Kanalseitenwand aufweist, die einen solchen Abstand von der äußeren Kanalseitenwand hat, dass eine gedachte Fluchtlinie der innere Kanalseitenwand durch das Spritzloch (19) verläuft.

12. Ventil nach einem der Ansprüche 1 bis 11, **dadurch gekennzeichnet, dass** mehrere Spritzlöcher (19) auf einen zur Ventilöffnung (14) konzentrischen Kreis mit gleichem Abstand voneinander angeordnet sind und eine der Zahl der Spritzlöcher (19) entsprechende Zahl von Drallkanälen (21) vorhanden ist, die sternförmig zur Ventilöffnung (14) mit unter der Ventilöffnung (14) liegendem Sternpunkt angeordnet sind.

13. Ventil nach Anspruch 12, **dadurch gekennzeichnet, dass** jeder Drallkanal (21) im Anströmbereich (212) gegenüber dem Einströmbereich (211) abgewinkelt ist.

14. Ventil nach einem der Ansprüche 1 bis 11, **dadurch gekennzeichnet, dass** ein einziges Spritzloch (19) vorhanden ist, das im Radialabstand zur Ventilöffnung (14) angeordnet ist, und dass zur Drallkammer (20) des einzigen Spritzlochs (19) zwei bogenförmige Drallkanäle (21) geführt sind, die spiegelbildlich zueinander angeordnet sind.

15. Ventil nach einem der Ansprüche 1 bis 14, **dadurch gekennzeichnet, dass** das mindestens eine Spritzloch (19) Zylinderform aufweist.

16. Ventil nach einem der Ansprüche 1 bis 14, **dadurch gekennzeichnet, dass** das mindestens eine Spritzloch (19) Kegelstumpfform mit in Strömungsrichtung zunehmendem Querschnitt aufweist.

17. Ventil nach einem der Ansprüche 1 bis 16, **dadurch gekennzeichnet, dass** das mindestens eine Spritzloch (19) eine zur Scheibenfläche der Spritzlochscheibe (18) rechtwinklig oder spitzwinkelig verlaufende Spritzlochachse aufweist.

18. Ventil nach einem der Ansprüche 1 bis 17, **dadurch gekennzeichnet, dass** der Ventilsitzkörper (12) mit am Ventilsitzkörper (12) befestigter Spritzlochscheibe (18) in das offene Ende eines hülsenförmigen Ventilsitzträgers (11) eingesetzt und mit diesem fest verbunden, z. B. verschweißt, ist.

## Claims

1. Valve for a flowing fluid, in particular dosing or injection valve for internal combustion engines, having a valve seat body (12) which forms a termination of a valve chamber (13) and in which there is formed a valve orifice (14), and having a spray hole disk (18) which is arranged downstream of the valve seat body (12) in a flow direction of the fluid, which spray hole disk has at least one spray hole (19), a swirl chamber (20) which is concentric with respect to the spray hole (19), and at least one swirl duct (21) which leads, at a constant height level, from the swirl chamber (20) as far as under the valve orifice (14), and the swirl chamber (20) and swirl duct (21) are formed as depressions into that disk surface of the spray hole disk (18) which faces toward the valve seat body (12), **characterized in that** the swirl duct (21) has a duct cross section and the spray hole (19) has a hole cross section, which cross sections are dimensioned such that the ratio of duct cross section to hole cross section is equal to or greater than 1.5, and wherein the swirl chamber (20) is formed in so as to be recessed relative to the respective swirl duct (21) itself.

2. Valve according to Claim 1, **characterized in that** the swirl chamber (20) has a chamber diameter and an axial chamber depth which are dimensioned such that the ratio of chamber depth to chamber diameter is defined by a value range whose lower limit value is 0.2 and whose upper limit value is 0.6.

3. Valve according to Claim 1 or 2, **characterized in that** the spray hole (19) has a hole length and a hole diameter which are dimensioned such that the ratio of hole length to hole diameter covers a value range whose lower limit value is 0.2 and whose upper limit value is 0.6.

4. Valve according to one of Claims 1 to 3, **characterized in that** the valve seat body (12) has a planar outer surface (121) averted from the valve chamber (13), and the spray hole disk (18) bears directly against the outer surface of the valve seat body (12).

5. Valve according to Claim 4, **characterized in that** the spray hole disk (18) engages by way of an integrally formed ring-shaped web (181), which runs at the edge in encircling fashion, over the valve seat body (20).

6. Valve according to one of Claims 1 to 3, **characterized in that** the valve seat body (12) has an outer surface (121) which is averted from the valve chamber (13), and, between the spray hole disk (18) and outer surface, there is arranged a compensating disk (22) with a planar disk surface, which bears flat against the spray hole disk (18), and with a central hole (23), which is coaxial with respect to the valve orifice (14).

7. Valve according to one of Claims 1 to 6, **characterized in that** the spray hole disk (18) has a disk thickness which lies in the range from 0.15 mm to 0.25 mm.

8. Valve according to one of Claims 1 to 7, **characterized in that** the swirl chamber (20) and swirl duct (21) are formed into the spray hole disk (18) by stamping or by way of material removal by erosion, etching or USP laser.

9. Valve according to one of Claims 1 to 8, **characterized in that** the swirl duct (21) has an inflow region (211), which leads away from the valve orifice (14), and a flow-admission region (212), which opens into the swirl chamber (20), which flow-admission region is arranged so as to be assigned to the swirl chamber (20) such that the fluid flows tangentially into the swirl chamber (20).

10. Valve according to Claim 9, **characterized in that** the duct width of the swirl duct (21) narrows in the flow direction of the fluid in the inflow region (211) and is preferably at least approximately constant in the flow-admission region (212).

11. Valve according to Claim 9 or 10, **characterized in that** the swirl duct (21) has, at least in the flow-admission region, an outer duct side wall, which leads tangentially to the wall of the swirl chamber (20), and, situated opposite said outer duct side wall, an inner duct side wall which is spaced apart from the outer duct side wall to such an extent that an imaginary line aligned with the inner duct side wall runs through the spray hole (19).

12. Valve according to one of Claims 1 to 11, **characterized in that** multiple spray holes (19) are arranged, with uniform spacings to one another, on a circle which is concentric with respect to the valve orifice (14), and a number of swirl ducts (21) corresponding to the number of spray holes (19) is provided, which swirl ducts are arranged in stellate fashion with respect to the valve orifice (14), with a star point situated below the valve orifice (14).

13. Valve according to Claim 12, **characterized in that** each swirl duct (21) is, in the flow-admission region (212), angled in relation to the inflow region (211).

14. Valve according to one of Claims 1 to 11, **characterized in that** a single spray hole (19) is provided which is arranged with a radial spacing to the valve orifice (14), and **in that** two arcuate swirl ducts (21) lead to the swirl chamber (20) of the single spray hole (19), which swirl ducts are arranged mirror-symmetrically with respect to one another.

15. Valve according to one of Claims 1 to 14, **characterized in that** the at least one spray hole (19) is of cylindrical shape.

16. Valve according to one of Claims 1 to 14, **characterized in that** the at least one spray hole (19) is of frustoconical shape with a cross section which increases in size in the flow direction.

17. Valve according to one of Claims 1 to 16, **characterized in that** the at least one spray hole (19) has a spray hole axis which runs at right angles or at an acute angle with respect to the disk surface of the spray hole disk (18).

18. Valve according to one of Claims 1 to 17, **characterized in that** the valve seat body (12) is, with spray hole disk (18) fastened to the valve seat body (12), inserted into the open end of a sleeve-shaped valve seat carrier (11) and fixedly connected, for example welded, thereto.

## Revendications

1. Soupape pour un fluide en écoulement, en particulier soupape de dosage ou d'injection pour moteurs à combustion interne, comprenant un corps de siège de soupape (12) fermant une chambre de soupape (13), dans lequel est réalisée une ouverture de soupape (14), comprenant un disque perforé d'injection (18) monté en aval du corps de siège de soupape (12) dans la direction d'écoulement du fluide, qui présente au moins un trou d'injection (19), une chambre de tourbillonnement (20) concentrique au trou d'injection (19) et au moins un canal de tourbillonnement (21) conduisant de la chambre de tourbillonnement (20) jusqu'en dessous de l'ouverture de soupape (14) avec un niveau en hauteur inchangé, et la chambre de tourbillonnement (20) et le canal de tourbillonnement (21) étant réalisés sous forme de renfoncements dans la surface de disque du disque perforé d'injection (18) tournée vers le corps de siège de soupape (12), **caractérisée en ce que** le canal de tourbillonnement (21) présente une section transversale de canal et le trou d'injection (19) présente une section transversale de trou qui sont dimensionnées de telle sorte que le rapport de la section transversale de canal à la section transversale de trous soit supérieur ou égal à 1,5 et la chambre de tourbillonnement (20) étant elle-même formée de manière renfoncée par rapport au canal de tourbillonnement (21) respectif.

2. Soupape selon la revendication 1, **caractérisée en ce que** la chambre de tourbillonnement (20) présente un diamètre de chambre et une profondeur de chambre axiale qui sont dimensionnés de telle sorte que le rapport de la profondeur de chambre au diamètre de chambre soit défini par une plage de valeurs dont la valeur limite inférieure vaut 0,2 et la valeur limite supérieure vaut 0,6.

3. Soupape selon la revendication 1 ou 2, **caractérisée en ce que** le trou d'injection (19) présente une longueur de trou et un diamètre de trou qui sont dimensionnés de telle sorte que le rapport de la longueur de trou au diamètre de trou couvre une plage de valeurs dont la valeur limite inférieure vaut 0,2 et la valeur limite supérieure vaut 0,6.

4. Soupape selon l'une quelconque des revendications 1 à 3, **caractérisée en ce que** le corps de siège de soupape (12) présente une surface extérieure plane (121) opposée à la chambre de soupape (13) et le disque perforé d'injection (18) s'applique directement contre la surface extérieure du corps de siège de soupape (12).

5. Soupape selon la revendication 4, **caractérisée en ce que** le disque perforé d'injection (18) vient en prise par le dessus avec le corps de siège de soupape (20) au moyen d'une nervure annulaire (181) formée d'une seule pièce et s'étendant sur la périphérie du côté du bord.

6. Soupape selon l'une quelconque des revendications 1 à 3, **caractérisée en ce que** le corps de siège de soupape (12) présente une surface extérieure (121) opposée à la chambre de soupape (13), et un disque d'équilibrage (22) est disposé entre le disque perforé d'injection (18) et la surface extérieure, lequel présente une surface de disque plane s'appliquant à plat contre le disque perforé d'injection (18) et un trou central (23) coaxial à l'ouverture de soupape (14).

7. Soupape selon l'une quelconque des revendications 1 à 6, **caractérisée en ce que** le disque perforé d'injection (18) présente une épaisseur de disque qui est comprise dans une plage de 0,15 mm à 0,25 mm.

8. Soupape selon l'une quelconque des revendications 1 à 7, **caractérisée en ce que** la formation de la chambre de tourbillonnement (20) et du canal de tourbillonnement (21) dans le disque perforé d'injection (18) est effectuée par gaufrage ou par enlèvement de matière par érosion, par gravure chimique ou par laser à impulsions ultra-courtes (UKP).

9. Soupape selon l'une quelconque des revendications 1 à 8, **caractérisée en ce que** le canal de tourbillonnement (21) présente une région d'admission (211) conduisant à l'écart de l'ouverture de soupape (14) et une région d'afflux (212) débouchant dans la chambre de tourbillonnement (20), qui est disposée de manière associée à la chambre de tourbillonnement (20) de telle sorte que le fluide entre tangentiellement dans la chambre de tourbillonnement (20).

10. Soupape selon la revendication 9, **caractérisée en ce que** la largeur de canal du canal de tourbillonnement (21) dans la région d'admission (211) se rétrécit dans le sens de l'écoulement du fluide et est de préférence au moins approximativement constante dans la région d'afflux (212).

11. Soupape selon la revendication 9 ou 10, **caractérisée en ce que** le canal de tourbillonnement (21) présente au moins dans la région d'afflux une paroi latérale de canal extérieure qui est guidée tangentiellement à la paroi de la chambre de tourbillonnement (20), et une paroi latérale de canal intérieure opposée à celle-ci qui présente un espacement par rapport à la paroi latérale de canal extérieure tel qu'une ligne de fuite imaginaire de la paroi latérale de canal intérieure s'étende à travers le trou d'injection (19).

12. Soupape selon l'une quelconque des revendications 1 à 11, **caractérisée en ce que** plusieurs trous d'injection (19) sont disposés de manière équidistante sur un cercle concentrique à l'ouverture de soupape (14) et un nombre de canaux de tourbillonnement (21) correspondant au nombre des trous d'injection (19) est prévu, lesquels canaux de tourbillonnement sont disposés en étoile par rapport à l'ouverture de soupape (14) avec un point central situé sous l'ouverture de soupape (14).

13. Soupape selon la revendication 12, **caractérisée en ce que** chaque canal de tourbillonnement (21) dans la région d'afflux (212) est coudé par rapport à la région d'admission (211).

14. Soupape selon l'une quelconque des revendications 1 à 11, **caractérisée en ce qu'**un trou d'injection unique (19) est prévu, lequel est disposé à distance radiale de l'ouverture de soupape (14) et **en ce que** deux canaux de tourbillonnement de forme arquée (21) sont guidés vers la chambre de tourbillonnement (20) du trou d'injection unique (19), et sont disposés l'un par rapport à l'autre avec une symétrie spéculaire.

15. Soupape selon l'une quelconque des revendications 1 à 14, **caractérisée en ce que** l'au moins un trou d'injection (19) présente une forme cylindrique.

16. Soupape selon l'une quelconque des revendications 1 à 14, **caractérisée en ce que** l'au moins un trou d'injection (19) présente une forme tronconique avec une section transversale augmentant dans la direction d'écoulement.

17. Soupape selon l'une quelconque des revendications 1 à 16, **caractérisée en ce que** l'au moins un trou d'injection (19) présente un axe de trou d'injection s'étendant à angle droit ou suivant un angle aigu par rapport à la surface de disque du disque perforé d'injection (18).

18. Soupape selon l'une quelconque des revendications 1 à 17, **caractérisée en ce que** le corps de siège de soupape (12), avec le disque perforé d'injection (18) fixé sur le corps de siège de soupape (12), est inséré dans l'extrémité ouverte d'un support de siège de soupape en forme de douille (11) et est connecté fixement à celui-ci, par exemple par soudage.
